# EUROPÄISCHE PATENTANMELDUNG

(11) **EP 3 036 981 A1**
(43) Veröffentlichungstag der Anmeldung: **29.06.2016**
(21) Anmeldenummer: 15192261.4
(22) Anmeldetag: 30.10.2015
(51) Int. Cl.: A01B 19/02, A01B 35/22

(54) **GRUBBER**

(30) Priorität: 15.12.2014 DE 202014106032 U
(71) Anmelder: Treffler Maschinenbau GmbH & Co. KG, 86554 Pöttmes-Echsheim (DE)
(72) Erfinder: Niedermaier, Josef, 86316 Ottmaring (DE)
(74) Vertreter: Charrier, Rapp & Liebau

(57) **Zusammenfassung**

Die Erfindung betrifft einen Grubber mit mehreren voneinander beabstandeten Querprofilen (5) an denen mehrere nebeneinander angeordnete, und an den aufeinanderfolgenden Querprofilen (5) seitlich zueinander versetzte Grubberzinken (6) befestigt sind, wobei an dem in Zugrichtung des Grubbers vorderen Querprofil (5) eine Aufhängung (7, 9) zum Ankoppeln an ein Zugfahrzeug (29) vorgesehen ist. Um eine kompakte Bauweise zu ermöglichen, ist dem am vorderen Querprofil (5) angeordneten Grubberzinken (6) ein zusätzlicher Grubberzinken (34) vorgeordnet.

## Beschreibung

Die Erfindung betrifft einen Grubber nach dem Oberbegriff des Anspruchs 1. Die Erfindung betrifft außerdem ein Bodenbearbeitungsgerät mit einem derartigen Grubber.

Grubber werden in der Landwirtschaft zum Auflockern und Umbruch von Böden, insbesondere für die flache Stoppelbearbeitung, eingesetzt. Sie weisen in der Regel einen an ein Zugfahrzeug ankoppelbaren Tragrahmen aus Längsprofilen und mehreren hintereinander angeordneten Querprofilen auf. Besonders bei Grubbern mit einer kompakten und kurzen Bauweise ist zur vollständigen Abdeckung der zu bearbeitenden Fläche oftmals eine asymmetrische Zinkenverteilung vorgesehen. Bei einer derartigen Zinkenverteilung kann es jedoch zu unerwünschten Seitenzugkräften und einer Häufelbildung kommen.

Aufgabe der Erfindung ist es, einen Grubber und ein Bodenbearbeitungsgerät mit einem solchen Grubber zu schaffen, die eine kompakte Bauweise aufweisen und die vorgenannten Nachteile vermeiden.

Diese Aufgabe wird durch einen Grubber mit den Merkmalen des Anspruchs 1 und durch ein Bodenbearbeitungsgerät mit den Merkmalen des Anspruchs 10 gelöst. Zweckmäßige Ausgestaltungen und vorteilhafte Weiterbildungen der Erfindung sind in den Unteransprüchen angegeben.

Bei dem erfindungsgemäßen Grubber ist den am vorderen Querprofil des Grubbetragrahmens angeordneten Grubberzinken ein zusätzlicher Grubberzinken vorgeordnet. Durch den zusätzlichen Grubberzinken kann eine zur Vermeidung von Seitenzugkräften erforderliche symmetrische Zinkenanordnung unter Beibehaltung einer sich auf dem Bodendruck positiv auswirkenden kurzen Bauart erreicht werden. Mit der symmetrischen Zinkenanordnung kann auch bei kompakter Bauweise die Entstehung von Seitenzugkräften vermieden werden.

Der zusätzliche Grubberzinken ist vorzugsweise zwischen zwei unteren Aufhängungsteilen der Aufhängung angeordnet und ragt zwischen zwei Unterlenker eines Dreipunkt-Krafthebers am Zugfahrzeug hinein.

Zweckmäßigerweise kann der der zusätzliche Grubberzinken an einem gegenüber der Aufhängung in Zugrichtung gesehen nach vorne versetzten weiteren Querträger befestigt sein.

In einer besonders kompakten Bauweise kann der Grubber drei voneinander beabstandete Querprofile aufweisen, an denen die Grubberzinken angeordnet sind. An einem in Zugrichtung gesehen hinteren Querprofil können fünf nebeneinander angeordnete Grubberzinken, an einem in Zugrichtung gesehen mittleren Querprofil vier nebeneinander angeordnete Grubberzinken und an einem in Zugrichtung gesehen vorderen Querprofil drei nebeneinander angeordnete Grubberzinken befestigt sein.

Die Grubberzinken können zweckmäßigerweise in Halterungen schwenkbar geführt und federnd nach unten vorgespannt sein. An einem der Querprofile des Grubbertragrahmens können zwei zueinander parallele Längsträger zur Halterung einer Zustreicheinrichtung und einer Packerwalze über Gelenke schwenkbar gelagert sein.

Die Erfindung betrifft außerdem ein Bodenbearbeitungsgerät mit einem vorstehend beschriebenen Grubber, einer dem Grubber in Zugrichtung nachgeordneten Zustreicheinrichtung und einer der Zustreicheinrichtung in Zugrichtung nachgeordneten Packerwalze.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Bodenbearbeitungsgerät mit einem Grubber, einer Zustreicheinrichtung und einer Packerwalze in einer Perspektive;
- **Figur 2**: das Bodenbearbeitungsgerät von Figur 1 in einer Seitenansicht;
- **Figur 3**: das Bodenbearbeitungsgerät von Figur 1 in einer Draufsicht;
- **Figur 4**: einen Walzenkörper der in Figur 1 gezeigten Packerwalze in einer Perspektive und
- **Figur 5**: den Walzenkörper der in Figur 1 gezeigten Packerwalze in einer Seitenansicht.

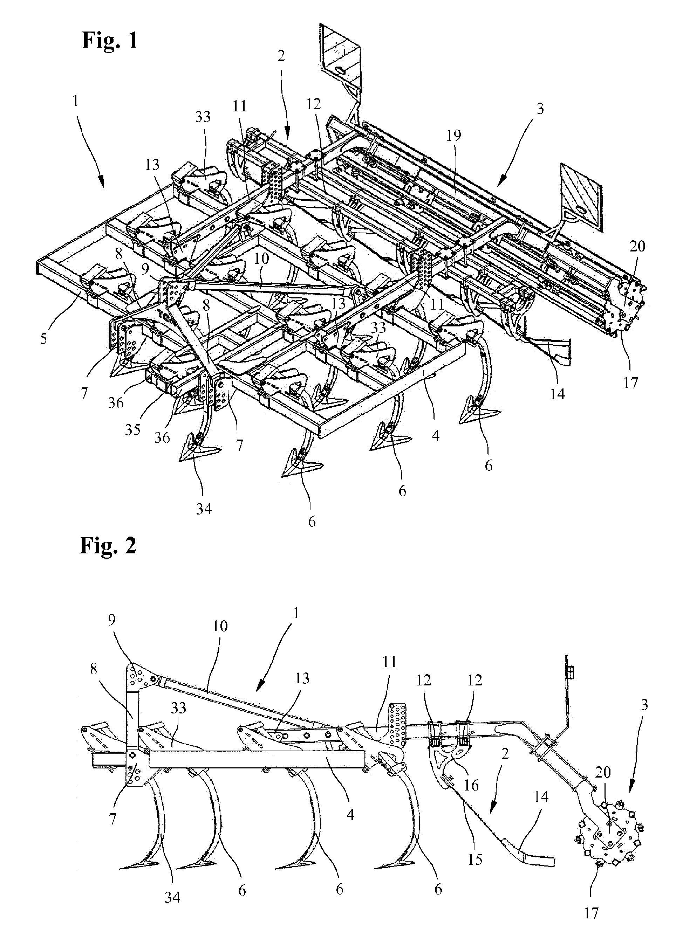

In den Figuren 1 bis 3 ist ein Bodenbearbeitungsgerät mit einem Grubber 1, einer dem Grubber 1 in Zugrichtung nachgeordneten Zustreicheinrichtung 2 und einer der Zustreicheinrichtung 2 in Zugrichtung nachgeordneten Packerwalze 3 für die Rückverfestigung des Bodens nach einer Bodenbearbeitung in verschiedenen Ansichten gezeigt. Der Grubber 1 weist in an sich bekannter Weise einen aus Längsprofilen 4 und Querprofilen 5 gebildeten Grubbertragrahmen mit mehreren an den Querprofilen 5 nebeneinander angeordneten und an den aufeinanderfolgenden Querprofilen seitlich zueinander versetzte Grubberzinken 6 auf. Bei der gezeigten Ausführung enthält der Grubbertragrahmen drei zueinander parallele Querprofile 5, an denen jeweils mehrere nebeneinander angeordnete Grubberzinken 6 befestigt sind.

Wie besonders aus Figur 2 hervorgeht, ist an dem in Zugrichtung gesehen vorderen Querprofil 5 des Grubbertragrahmens eine Aufhängung mit zwei unteren Aufhängungsteilen 7 zum Ankoppeln zweier Unterlenker und einem durch zwei schräge Stützen 8 an den unteren Aufhängungsteilen 7 abgestützten oberen Aufhängungsteil 9 zum Ankoppeln eines Oberlenkers eines Dreipunkt-Krafthebers an einem Zugfahrzeug vorgesehen. Das obere Aufhängungsteil 9 ist neben den beiden Stützen 8 auch durch zwei schräg nach unten und zur Seite verlaufende Streben 10 an zwei inneren Längsprofilen 4 des Grubbertragrahmens abgestützt.

Die Zustreicheinrichtung 2 und die Packerwalze 3 sind an einem aus Längsträgern 11 und Querträgern 12 gebildeten Traggestell schwenkbar am Grubbertragrahmen angelenkt. Aus Figur 2 ist ersichtlich, dass bei der gezeigten Ausführung zwei zueinander parallele Längsträger 11 mit ihrem einen Ende über Gelenke 13 am mittleren Querprofil 5 des Grubbertragrahmens angelenkt. An den nach unten abgewinkelten freien Enden der beiden Längsträger 11 ist die Packerwalze 3 befestigt.

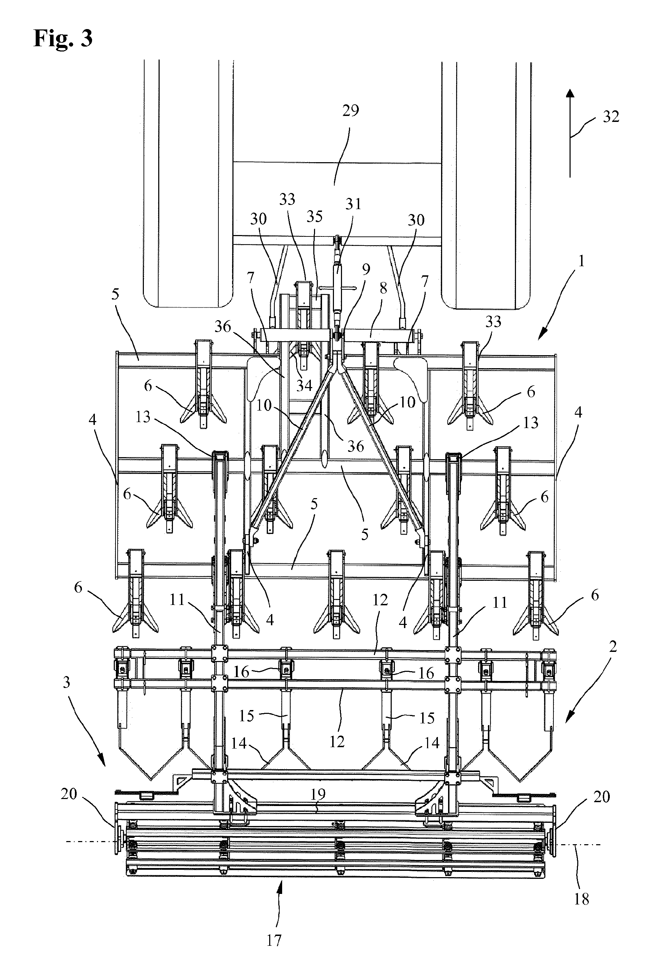

In Figur 3 ist erkennbar, dass die in Zugrichtung hinter dem Grubber 1 angeordnete Zustreicheinrichtung 2 mehrere nebeneinander angeordnete, abgewinkelte Zustreichelemente 14 umfasst, die über Blattfedern 15 und Halterungen 16 an den Querträgern 12 befestigt sind. Die in Zugrichtung hinter der Zustreicheinrichtung 2 angeordnete Packerwalze 3 enthält einen Walzenköper 17, der um seine Längsachse 18 drehbar an einem aus einer Quertraverse 19 und zwei Lagerplatten 20 gebildeten Träger gelagert ist. Die Quertraverse 19 ist an den nach unten abgewinkelten hinteren Enden der beiden Längsträger 11 befestigt. Der Walzenkörper 17 ist zwischen den beiden an den Enden des Querträgers 19 befestigten Lagerplatten 20 gelagert.

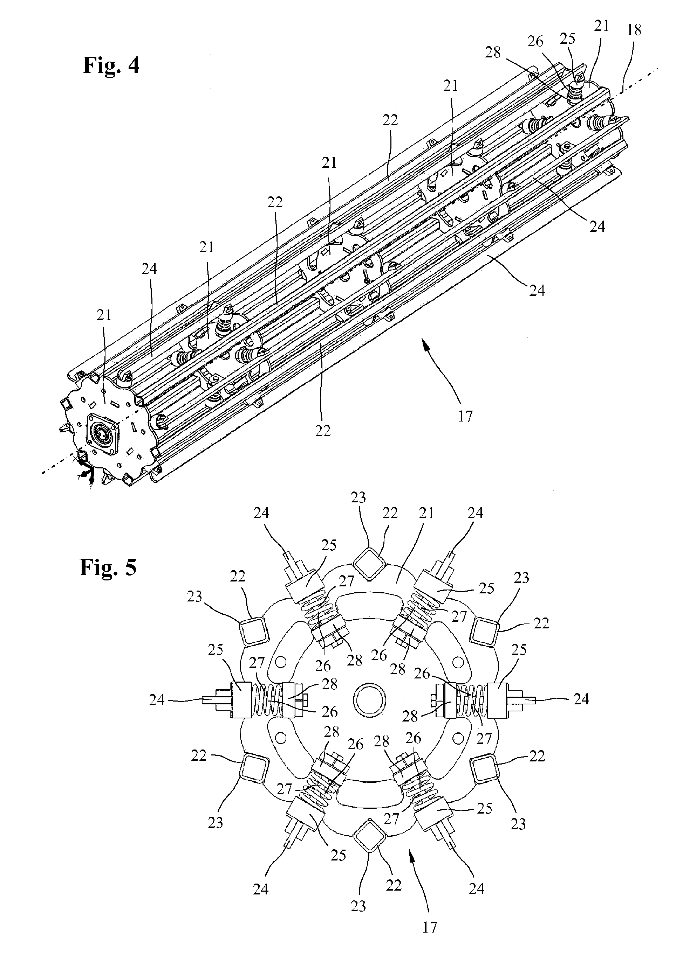

Der in Figur 4 gesondert dargestellte Walzenkörper 17 der Packerwalze 3 enthält mehrere in Richtung der Längsachse 18 voneinander beabstandete, parallele Scheiben 21, die durch parallel zur Längsachse 18 des Walzenkörpers 17 verlaufende und über den Umfang der Scheiben 21 gleichmäßig verteilte Längsprofile 22 miteinander verbunden sind. Wie aus Figur 5 hervorgeht, sind die Längsprofile 22 bei der gezeigten Ausführung als Rechteckprofilrohre ausgeführt und derart angeordnet, dass eine Kante 23 radial nach außen weist. Die Längsprofile 22 können mit den Scheiben 21 verschweißt oder auf andere geeignete Weise fest mit diesen verbunden sein.

Zwischen den Längsprofilen 22 sind dazu parallele und ebenfalls parallel zur Längsachse 18 des Walzenkörpers 17 verlaufende Leisten 24 angeordnet. Die radial nach außen vorstehenden Leisten 24 sind in Haltern 25 angeordnet und werden durch Druckfedern 26 radial nach außen gedrückt. Die Halter 25 für die Leisten 24 sind über Bolzen 27 radial verschiebbar in inneren Führungen 28 geführt. Die hier als Spiralfedern ausgebildeten Druckfedern 26 sind zwischen den inneren Führungen 28 und den Haltern 25 eingespannt. Die zwischen den Längsprofilen 22 angeordneten Leisten 24 werden beim Auftreffen auf den Boden eingerückt und federn beim Austreten aus dem Boden wieder zurück. Dadurch kann angesammeltes Erdreich entfernt werden, wodurch sich ein besonders guter Selbstreinigungseffekt ergibt.

Aus Figur 3 ist ersichtlich, dass das in Figur 1 in einer Perspektive dargestellte Bodenbearbeitungsgerät an einen Traktor oder einem anderen schematisch dargestellten Zugfahrzeug 29 mit einem Dreipunkt-Kraftheber angekuppelt werden kann. Der am Zugfahrzeug 29 angeordnete Dreipunkt-Kraftheber weist in an sich bekannter Weise zwei anheb- und absenkbare Unterlenker 30 und einen z.B. als Gewindespindel ausgeführten Oberlenker 31 auf. Über die beiden in die unteren Aufhängungsteile 7 eingreifenden Unterlenker 30 und das obere Aufhängungsteil 9 eingreifenden Oberlenker kann das Bodenbearbeitungsgerät sicher an dem Zugfahrzeug angehängt und in einer abgesenkten Stellung in Richtung des Pfeils 32 über den zu bearbeitenden Boden gezogen werden.

Bei der gezeigten Ausführung sind an dem in Zugrichtung gesehen hinteren Querprofil 5 des Grubbers 1 fünf nebeneinander angeordnete Grubberzinken 6, an dem in Zugrichtung gesehen mittleren Querprofil 5 vier nebeneinander angeordnete Grubberzinken 6 und an dem in Zugrichtung gesehen vorderen Querprofil 5 drei nebeneinander angeordnete Grubberzinken 6 montiert. Die Grubberzinken 6 sind in an sich bekannter Weise über Halterungen 33 an den zueinander parallelen Querprofilen 6 befestigt und derart angeordnet, dass die Grubberzinken 6 an einem Querprofil 5 gegenüber den Grubberzinken 6 an dem darauffolgenden Querprofil 5 seitlich versetzt und in der Draufsicht keilförmig angeordnet sind. Die Grubberzinken 6 sind in den Halterungen 33 schwenkbar geführt und werden durch eine nicht dargestellte Feder nach unten vorgespannt.

Den drei Grubberzinken 6 an dem in Zugrichtung gesehen vorderen Querprofil 5 ist ein zusätzlicher Grubberzinken 34 vorgeordnet. Der zwischen den unteren Aufhängungsteilen 7 angeordnete zusätzliche Grubberzinken 34 ist über eine Halterung 33 an einem gegenüber den unteren Aufhängungsteilen 7 in Zugrichtung gesehen nach vorne versetzten weiteren Querträger 35 befestigt und ragt zwischen die beiden Unterlenker 30 des Zugfahrzeugs 29 hinein. Durch die Anordnung des zusätzlichen Grubberzinkens 34 wird die bevorzugte kurze Bauart des Grubbers eingehalten und dennoch ein Seitenzug vermieden. Der weitere Querträger 35 ist gegenüber den anderen Querträgern 5 relativ kurz ausgebildet und wird durch zwei parallele Längsträger 36 an zwei Querprofilen 5 des Grubbers gehalten. Die Längsträger 36 können mit den Querprofilen 5 verschweißt sein. Auch der zusätzliche Grubberzinken 34 wird über eine Halterung 33 schwenkbar geführt und durch eine Feder nach unten vorgespannt.

## Patentansprüche

1. Grubber mit mehreren voneinander beabstandeten Querprofilen (5) an denen mehrere nebeneinander angeordnete, und an den aufeinanderfolgenden Querprofilen (5) seitlich zueinander versetzte Grubberzinken (6) befestigt sind, wobei an dem in Zugrichtung des Grubbers vorderen Querprofil (5) eine Aufhängung (7, 9) zum Ankoppeln an ein Zugfahrzeug (29) vorgesehen ist, **dadurch gekennzeichnet, dass** den am vorderen Querprofil (5) angeordneten Grubberzinken (6) ein zusätzlicher Grubberzinken (34) vorgeordnet ist.

2. Grubber nach Anspruch 1, **dadurch gekennzeichnet, dass** der zusätzliche Grubberzinken (34) zwischen zwei unteren Aufhängungsteilen (7) der Aufhängung (7, 9) angeordnet ist.

3. Grubber nach Anspruch 1 oder 2, der zusätzliche Grubberzinken (34) an einem gegenüber der Aufhängung (7, 9) in Zugrichtung gesehen nach vorne versetzten weiteren Querträger (35) befestigt ist.

4. Grubber nach Anspruch 3, **dadurch gekennzeichnet, dass** der weiteren Querträger (35) durch zwei parallele Längsträger (36) gehalten ist.

5. Grubber nach Anspruch 4, **dadurch gekennzeichnet, dass** die beiden Längsträger (36) an mindestens einem Querprofil (5) befestigt sind.

6. Grubber nach einem der Ansprüche 1 bis 5, **dadurch gekennzeichnet**, das die Grubberzinken (6) an drei voneinander beabstandeten Querprofilen (5) angeordnet sind.

7. Grubber nach einem der Ansprüche 1 bis 6, **dadurch gekennzeichnet**, das an einem in Zugrichtung gesehen hinteren Querprofil (5) fünf nebeneinander angeordnete Grubberzinken (6), an einem in Zugrichtung gesehen mittleren Querprofil (5) vier nebeneinander angeordnete Grubberzinken (6) und an einem in Zugrichtung gesehen vorderen Querprofil (5) drei nebeneinander angeordnete Grubberzinken 6 befestigt sind.

8. Gubber nach einem der Ansprüche 1 bis 7, **dadurch gekennzeichnet**, das die Grubberzinken (6) in Halterungen (33) schwenkbar geführt und federnd nach unten vorgespannt sind.

9. Grubber nach einem der Ansprüche 1 bis 8, **dadurch gekennzeichnet, dass** an einem der Querprofile (5) zwei zueinander parallele Längsträger (11) zur Halterung einer Zustreicheinrichtung (2) und einer Packerwalze (3) über Gelenke (13) schwenkbar gelagert sind.

10. Bodenbearbeitungsgerät mit einem Grubber (1), einer dem Grubber (1) in Zugrichtung nachgeordneten Zustreicheinrichtung (2) und einer der Zustreicheinrichtung (2) in Zugrichtung nachgeordneten Packerwalze (3), **dadurch gekennzeichnet, dass** der Grubber (1) nach einem der Ansprüche 1 bis 9 ausgebildet ist.
